# EUROPÄISCHE PATENTSCHRIFT

(11) **EP 1 540 066 B1**
(45) Veröffentlichungstag und Bekanntmachung des Hinweises auf die Patenterteilung: **10.06.2009**
(21) Anmeldenummer: 03773614.7
(22) Anmeldetag: 28.08.2003
(51) Int. Cl.: D06F 37/26, F16B 19/10

(54) **WASCHMASCHINEN-LAUGENBEH LTER**
LIQUOR CONTAINER FOR A WASHING MACHINE
CUVE DE LAVE-LINGE

(30) Priorität: 11.09.2002 ES 200202160
(43) Veröffentlichungstag der Anmeldung: 15.06.2005
(73) Patentinhaber: BSH Bosch und Siemens Hausgeräte GmbH, 81739 München (DE)
(72) Erfinder: GRACIA BOBED, Ismael, 50194 Zaragoza (ES)
(86) Internationale Anmeldenummer: PCT/EP2003/009638
(87) Internationale Veröffentlichungsnummer: WO 2004/033785

(56) Entgegenhaltungen:
- EP-A- 0 789 104
- EP-A- 0 854 223
- EP-A- 0 961 374
- US-A- 3 606 814
- US-A- 4 276 806

## Beschreibung

### Aufgabe der Erfindung

Die Erfindung betrifft einen Waschmaschinen-Laugenbehälter der Art, die durch zwei Hälften gebildet ist, welche durch die Mündungen ihrer offenen Basisteile verbunden sind, und welche getrennt werden können, um die Reparatur von gelegentlich auftretenden Defekte zu ermöglichen.

Die Erfindung hat die Aufgabe, die Befestigung beider Hälften auf schnelle und einfache Weise zu ermöglichen, die außerdem fest und dauerhaft sein soll.

Es ist eine weitere Aufgabe der Erfindung, die Trennung beider Hälften auf schnelle und einfache Weise ohne das Erfordernis jeglicher Zerstörung der Verbindungs-Elemente zu ermöglichen, um allfällige Reparaturen von Defekten und die nachfolgende Verbindung beider Hälften nach der Durchführung der Reparatur zu ermöglichen.

### Allgemeiner Stand der Technik

Im Stand der Technik sind Waschmaschinen-Laugenbehälter bekannt, in deren Innern eine Wäschetrommel untergebracht ist. Diese Laugenbehälter sind durch zwei Hälften offener Basisteile gebildet, welche durch Spritzgießen hergestellt sind und deren Mündungen ergänzende Verbindungsmittel umfassen, um die Befestigung beider Hälften mithilfe der Zwischenlegung einer Dichtung durchzuführen (EP-A-0 854 223).

Ein solcher Waschmaschinen-Laugenbehälter ist auch durch das spanische Patent 96 00 222 bekannt, das dem Inhaber der vorliegenden Erfindung erteilt wurde und ergänzende Befestigungsmittel der beiden Hälften beschreibt. In einer der Hälften sind dazu in der Mündung ihres offenen Basisteils axiale Vorsprünge in Harpunenspitzenform gebildet, die in radialen Ansätze in umgekehrter U-Form eingeführt und darin festgehalten sind, welche in der Mündung des offenen Basisteils der anderen Hälfte vorgesehen sind.

Diese Gestaltung ermöglicht die Verbindung der beiden Hälften mithilfe eines einfachen Druckstoßes und die spätere Trennung derselben mithilfe eines Schraubendrehers oder dergleichen durch Auslösen der axialen Harpunenspitz-Vorsprünge aus den U-Form-Ansätzen, wodurch im Fall von Defekten Reparaturen durchgeführt werden können.

Nach der Durchführung einer Reparatur können beide Hälften erneut miteinander verbunden werden, wofür an ihren Mündungen mehrere herkömmliche Laschen vorgesehen sind, die eine Verbindung mithilfe entsprechender Schrauben und Muttern ermöglichen.

### Beschreibung der Erfindung

Der Erfindung gelingt die Beseitigung der Nachteile des Standes der Technik, bei dem aufwendige Laschen zur Verbindung der Mündungen der beiden Hälften des Laugenbehälters notwendig sind, um die erneute Montage der beiden Hälften nach einer Trennung durchzuführen, durch ergänzende Verbindungsmittel an der Mündung einer der beiden Hälften mit mehreren radialen Erstreckungen, die mit einer Öffnung versehen sind, welche durch einen vorderen Abschnitt und einen hinteren Abschnitt gebildet ist und in deren Verbindungsbereich einen kleineren Durchmesser aufweist.

Außerdem umfaßt die Mündung der anderen Hälfte mehrere Zapfen mit einem Durchmesser, der größer als der kleinere Durchmesser der Öffnung der radialen Erstreckung ist. Die Zapfen sind mit einer axialen Öffnung versehen, in deren hinteren Zugang Dübel in das axiale Durchgangsloch beinhalten. Die Zapfen sind außerdem mit Längsnuten versehen, so daß die Zapfen zum Bewirken der Verbindung beider Hälften, die den Zylinder bilden, in die entsprechende Öffnung der radialen Erstreckung eingeführt werden, bei deren Verschiebung sich die Wände der Zapfen durch die Anordnung der Längsnute und weil der Durchmesser der Zapfen größer als der Durchmesser der Öffnung ist, die in den radialen Erstreckungen vorgesehen ist, schließen. Wenn die Zapfen die Öffnungen durchdrungen haben, werden die Dübel in das axiale Durchgangsloch eingedrückt. Dieser Vorgang bringt mit sich, dass die Zapfenwandung durch Drücken gegen die Wände des vorderen Abschnitts der Öffnung der radialen Erstreckungen geöffnet wird, wodurch eine feste und dauerhafte Befestigung erzielt ist.

In einer Ausführungsform der Erfindung weist der hintere Abschnitt der Öffnung der radialen Erstreckungen einen Durchmesser auf, der von der Innenseite zur Außenseite zunimmt, um die Öffnung der Wand der Zapfen zu ermöglichen.

In der bevorzugten Ausführungsform der Erfindung ist der hintere Abschnitt der Öffnung der radialen Erstreckungen kegelstumpfförmig.

In gleicher Weise weist der vordere Abschnitt der Öffnung der radialen Erstreckungen einen Durchmesser auf, der von der Außenseite zur Innenseite abnimmt, wie zum Beispiel ein kegelstumpfförmiger Abschnitt, um die Einführung der Zapfen zu ermöglichen, wobei diese einen Durchmesser aufweisen, der kleiner als der Zugang zum vorderen Abschnitt der Öffnung ist.

In einer anderen Ausführungsform der Erfindung ist im Übergangsbereich vom der vorderen und hinteren Abschnitte der Öffnung eine Abstufung vorgesehen, in deren Fall das vordere Ende der Zapfen durch Rasthaken zum Einkuppeln in der Abstufung abgeschlossen ist, und danach zum Erzielen der korrekten Befestigung die Dübel in das axiale Durchgangsloch eingeführt werden, um die Dübel durch die genannte Öffnung einzudrücken, wodurch bewirkt wird, dass sich die Wände der Zapfen öffnen, wodurch das Einkuppeln der Rasthaken erfolgt, ohne Möglichkeit des erneuten Lösens.

In jeglicher der beiden beschriebenen Ausführungsformen ist vorgesehen, dass die Öffnung der radialen Erstreckung Zapfeneinführungsanschläge umfasst, die vorzugsweise am vorderen Rand des hinteren Abschnitts angeordnet sind.

Um das Festhalten des Dübels im axialen Durchgangsloch des Zapfens zu ermöglichen, sind am vorderen Zugang des axialen Durchgangsloches kleine Befestigungsrippen vorgesehen.

Der Dübel ist mithilfe der kleinen Befestigungsrippen an einem Abschnitt im axialen Durchgangsloch des Zapfens mit einem kegelstumpfförmige Zugang festgehalten, dessen größerer Durchmesser den Zugang zum axialen Durchgangsloch bildet.

In der bevorzugten Ausführungsform der Erfindung ist der Dübel im axialen Durchgangsloch des Zapfens von einem zylindrischen Körper gebildet, dessen zum Einführen dienendes Ende mit einer Anlauf-Schräge am Umfang versehen ist, die das Einführen in das Durchgangsloch erleichtert.

Alle beschriebenen Ausbildungen der Erfindung ermöglichen das Auseinanderbauen der zwei Hälften, die den Laugenbehälter bilden, um beispielsweise eine Reparatur durchzuführen, wenn sie nötig wird. Dazu wird zunächst der zylindrische Dübel (mithilfe eines Werkzeugs) entfernt, der im axialen Durchgangsloch des Zapfens eingedrückt ist, so dass seine Wände in die Ruheposition zurückkehren, wodurch die Entfernung der Zapfen aus dem Innern der Öffnung der radialen Erstreckungen ermöglicht ist. Für den Fall, dass die Zapfen durch die Rasthaken verrastet sind, müssen diese mithilfe eines Werkzeugs entsperrt werden, um die vollständige Freigabe und Auskupplung derselben zu bewirken, wodurch die Entfernung der Zapfen ermöglicht ist.

Zum erneuten Zusammenfügen können die Hälften wieder verbunden dadurch werden, dass die Zapfen wieder in die entsprechende Öffnung eingeführt und anstelle der Dübel eine Schraube vom freien Ende des Zapfens her durch die Öffnung der radialen Erstreckung und das axiale Durchgangsloch des Zapfens eingeführt und eingeschraubt wird, wodurch sich die Wandung des Zapfens spreizt und dadurch die Verbindung beider Hälften miteinander bewirkt.

Es ist darauf hinzuweisen, dass in den beschriebenen Ausführungsformen auf der hinteren Seite der Zapfen ein konzentrischer Schutzvorsprung für den Dübel vorgesehen sein kann, um das Zerlegen des Laugenbehälters zu erleichtern.

### Kurze Beschreibung der Figuren

In der Zeichnung sind mehrere Ausführungsbeispiele der Erfindung dargestellt, die in der Beschreibung nachstehend näher beschrieben sind. In der Zeichnung zeigen
- Fig. 1: eine perspektivische Ansicht eines Zapfens, der an der Mündung eines offenen Basisteils einer der beiden Hälften des Laugenbe- hälters und gegenüber der Öffnung der zugeordneten radialen Erstreckung angeordnet ist, die an der Mündung des offenen Ba- sisteils der anderen Hälfte angebracht ist,
- Fig. 2: eine perspektivische Ansicht von der hinteren Seite des Zapfens gemäß Fig. 1 aus,
- Fig. 3: einen Querschnitt durch einen Zapfen und eine Öffnung gemäß Fig. 1, mit Darstellung des Innenaufbaus jeder der darin enthalte- nen Elemente,
- Fig. 4: eine Ansicht des Zapfens und der Öffnung entsprechend der Fig. 3, bei dem die beiden Laugenbehälterhälften mittels des Dübels im Zapfen durch die Spreizung im Inneren der Öffnung der radialen Erstreckung verbunden sind,
- Fig.5.: eine Verbindung der Laugenbehälterhälften gemäß Fig. 4, die nach dem Zerlegen wieder zusammengebaut wurden, wobei eine Schraube im Inneren des axialen Durchgangsloches des Zapfens den Dübel ersetzt,
- Fig. 6: einen Querschnitt durch einen Zapfen und eine Öffnung gemäß einer anderen Ausführungsform der Erfindung in einer Montage- phase gemäß Fig. 3 und
- Fig. 7: einen Querschnitt durch einen Ausführungsform gemäß Fig. 6 im montierten Zustand.

### BESCHREIBUNG DER BEVORZUGTEN AUSFÜHRUNGSFORMEN

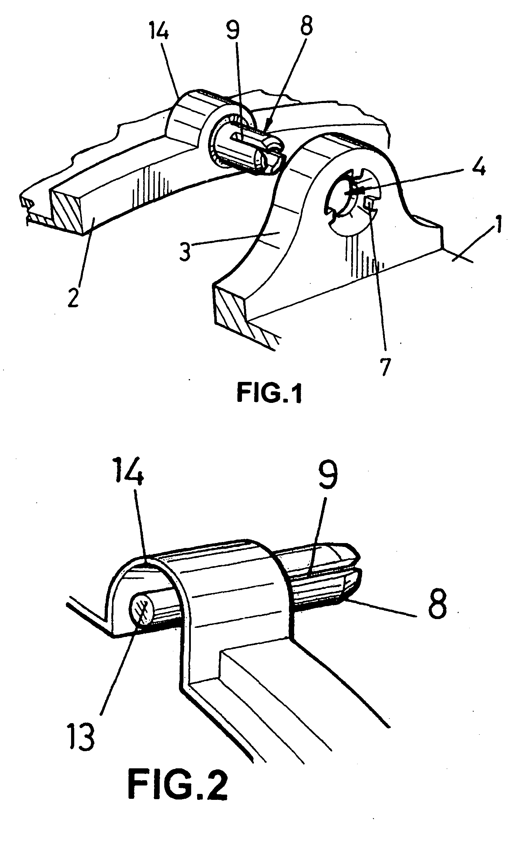

In Fig. 1 bis 5 ist ein erstes Ausführungsbeispiel gezeigt, in dem ein Waschmaschinen-Laugenbehälter (nicht dargestellt), in dessen Inneren eine Wäschetrommel (nicht dargestellt) gelagert ist, durch zwei Hälften gebildet ist, die durch die Mündungen 1 und 2 ihrer offenen Basisteile mithilfe der Zwischenlegung einer Dichtung, die in der Zeichnung nicht dargestellt ist, verbunden sind.

Dafür verfügt eine der Mündungen 1 über mehrere radiale Erstreckungen 3 (einfacherweise ist nur eine dargestellt), die mit einer Öffnung 4 versehen sind, welche durch zwei kegelstumpfförmige Abschnitte 5 und 6 gebildet ist, wobei der vordere Abschnitt 5 wie auch der hintere Abschnitt 6 von außen nach innen abnimmt, wodurch sie in dem Bereich, in dem sie sich vereinen, einen kleineren Durchmesser 15 definieren.

Ergänzend umfasst die andere Mündung 2 des offenen Basisteils der anderen Hälfte der Trommel mehrere Zapfen 8, die den Öffnungen 4 entsprechend angeordnet sind.

Die Zapfen 8 sind mit Schlitzen 9 versehen, die in Bezug auf Anschläge 7, die im vorderen Abschnitt 5 der Öffnung 4 angeordnet sind, versetzt sind.

Außerdem enthalten die Zapfen 8 ein axiales Durchgangsloch 10, das in seiner hinteren Mündung einen kegelstumpfförmigen Abschnitt 11 aufweist, in dem ein zylindrischer Körper, ein Dübel 13, untergebracht ist, welcher mithilfe kleiner Rippen 12 im Zugang des Durchgangsloches 10 festgehalten ist.

Außerdem ist das hintere Ende der Zapfen 8 mit einem konzentrischen Schutzvorsprung 14 für den Dübel 13 versehen, die den Dübel schützen, wenn die Laugenbehälterhälften transportiert werden.

An diesem Punkt ist darauf hinzuweisen, dass der Außendurchmesser der Zapfen 8 größer ist als der kleinere Durchmesser 15, an dem sich die beiden Abschnitte 5 und 6 vereinigen.

Zur Herstellung der Verbindung der beiden Laugenbehälterhälften werden die Zapfen 8 den Öffnungen 4 gegenüber zur Einführung angeordnet. Die Einführung wird durch eine Schräge erleichtert, die am vorderen Ende der Zapfen 8 vorgesehen ist und ihren Eintritt in den hinteren Abschnitt 6 der Öffnung 4 ermöglicht, wonach, da sich dieser Abschnitt auf den kleineren Durchmesser 15 verjüngt, die Wände der Zapfen 8 bei ihrem Einführen infolge der Schlitze 9 sich verengen, bis das Ende der Zapfen 8 die Anschläge 7 berührt.

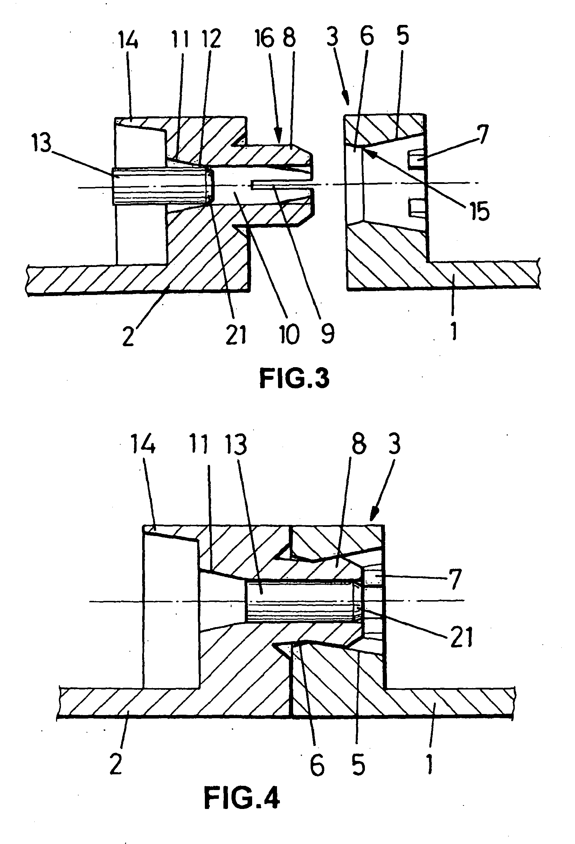

Dann wird der Dübel 13 in das axiale Durchgangsloch eingeführt. Dieser Vorgang erfolgt durch einen einfachen Druckstoß, der die kleinen Rippe 12 bricht und den Dübel 13 eindrückt, der bei seinem Eindringen Kraft zur Öffnung der Wände der Zapfen 8 ausübt, wobei er diese gegen den vorderen Abschnitt 5 des Durchgangsloches 4 drückt (Fig. 4), so dass eine perfekte Verbindung der beiden Laugenbehälterhälften miteinander erzielt wird.

Der Dübel 13 weist an seinem Vorderende eine umfängliche Auflaufschräge 21 auf, die seine Druckeinführung in das Durchgangsloch 10 erleichtert.

Nach der Herstellung der Verbindung können diese beiden Hälften auch wieder getrennt werden. Dazu wird der Dübel 13 entfernt, indem er mithilfe eines Werkzeugs von der vorderen oder hinteren Seite des Durchgangsloches 10 her nach außen gedrückt wird, so dass bei der Entfernung des Dübels 13 die Entfernung der Zapfen 8 aus der Öffnung ermöglicht ist, womit die beiden Laugenbehälterhälften getrennt werden können.

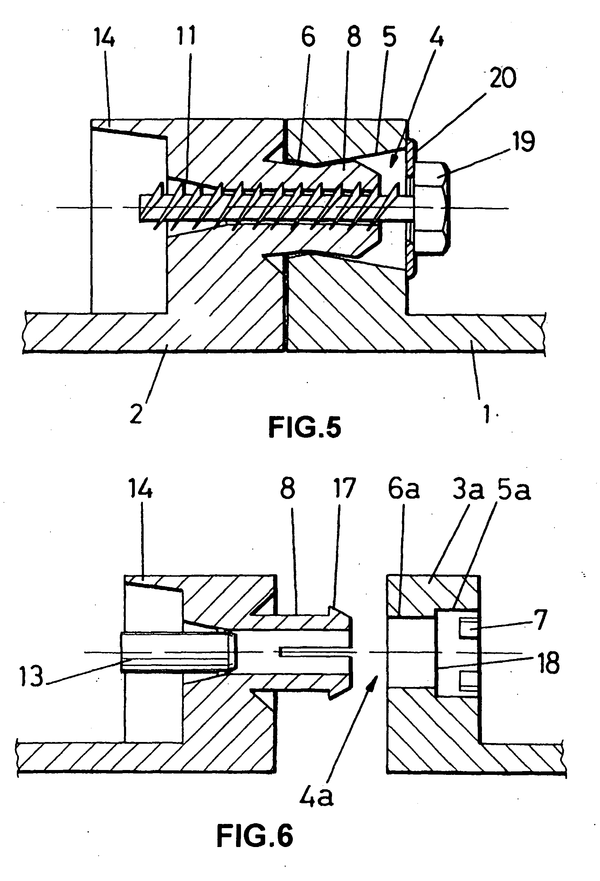

Zum Zusammenbauen wird auf die bereits beschriebene Weise vorgegangen. Beim abermaligen Zusammenbauen der Befestigung kann der Dübel 13 erneut verwendet werden. Er könnte aber, weil er aus Kunststoff ist, möglicherweise etwas an Durchmesser verloren haben und dann die Verbindung nicht mehr ausreichend sichern. Um aber sicherzugehen, dass die Verbindung nach dem Wiederzusammenbau auch stabil genug ist, kann ein neuer Dübel mit größerem Durchmesser verwendet werden. Anstelle der Befestigung mithilfe eines Dübels 13 kann aber die Befestigung auch mithilfe einer selbstschneidenen Schraube 19 unter Anordnung einer Unterlegscheibe 20 am Zugang der Öffnung 4 ausgeführt werden (Fig. 5).

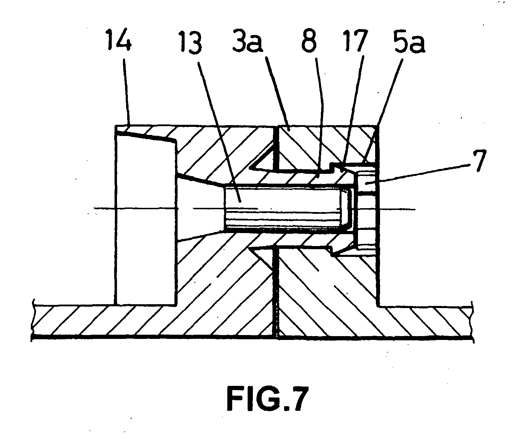

Fig. 6 und 7 zeigen ein anderes mögliches Ausführungsbeispiel der Erfindung, bei dem die Zapfen 8 an ihrem Vorderende in Rasthaken 17 enden. In diesem Fall weist die Öffnung 4a einen zylindrischen vorderen Abschnitt 5a auf, der sich nach einer Abstufung 18 entsprechend einem hinteren Abschnitt 6a fortsetzt. Die Abstufung 18 definiert einen Durchmesser, der dem Durchmesser 15 entspricht.

Zur Herstellung der Verbindung der beiden Laugenbehälterhälften werden die Zapfen 8 in das Innere der Öffnung 4a eingeführt. Während des Eindringvorgangs schließen sich die Wände der Zapfen 8 durch das Ausweichen der Rasthaken 17 vor der Innenwand im Abschnitt 6a, wobei die Zapfen 8 eingeführt werden, bis sie die Anschläge 7 berühren. In dieser Montagephase haben die Rasthaken 17 die Abstufung 18 passiert, wodurch die Einrastung in dieselbe erfolgt. Danach wird der Dübel 13 mithilfe eines einfachen Druckstoßes eingeführt, wie für das vorhergehende Ausführungsbeispiel beschrieben, wobei jedoch in diesem Falle die Rasthaken 17 gegen den vorderen Abschnitt 5a der Öffnung 4a drücken, womit eine perfekte Verbindung beider Hälften untereinander erzielt ist.

In diesem Ausführungsbeispiel wird zum Trennen der beiden Laugenbehälterhälften auf eine Weise vorgegangen, die äquivalent zum vorhergehenden Beispiel ist, indem nämlich der Dübel 13 aus dem axialen Durchgangsloch 10 entfernt wird und anschließend die Rasthaken 17 mithilfe eines Werkzeugs entriegelt werden, damit sie die Abstufung 18 freigeben, wodurch ermöglicht ist, den Zapfen 8 aus dem Inneren der Öffnung 4 zu entfernen, womit die Trennung beider Hälften vorgenommen ist.

Zum erneuten Zusammenbauen der Trommel wird auf die gleiche Weise vorgegangen wie für das vorhergehende Beispiel beschrieben, nämlich die endgültige Verbindung mithilfe einer selbstschneidenden Schraube 19 und der entsprechenden Unterlegscheibe 20.

## Patentansprüche

1. Waschmaschinen-Laugenbehälter, umfassend zwei, Hälften, die mit ergänzenden Verbindungsmitteln aus Zapfen (8) und offnungen (4) an den Mündungen (1, 2) ihrer offenen Basisteile zur Herstellung einer festen Verbindung der beiden Hälften miteinander versehen sind, wobei die Öffnungen (4, 4a) in radialen Erstreckungen (3, 3a) der Mündung (1) des einen Basisteils angebracht sind und einen in Steckrichtung des Zapfens (8) hinteren Abschnitt (5, 5a) und einen vorderen Verbindungsbereich (6, 6a) aufweisen, der einen kleineren Durchmesser hat (15, 18); **dadurch gekennzeichnet, dass** die Zapfen (8) der Mündung (2) des anderen Basisteils einen Durchmesser haben, der größer ist als der kleinere Durchmesser (15, 18) des Verbindungsbereiches (6, 6a) der Öffnungen (4, 4a) der radialen Erstreckungen (3, 3a), wobei die Zapfen (8) ein axiales Durchgangsloch (10) aufweisen, das von einem hinteren Zugang aus mit einem Dübel (13) gleichen Durchmessers wie das Durchgangsloch durchdringbar ist, und dass jeder Zapfen (8) an seinem vorderen Ende Längsschlitze (9) aufweist zum erleichterten Einführen des Zapfens (8) in die zugeordnete Öffnung (4, 4a), wobei sich die Wand des Zapfens (8) im Verbindungsbereich (6, 6a) unter Verengung der Schlitze (9) schließt, und zum anschließenden Einführen des Dübels (13) in das axiale Durchgangsloch (10) des Zapfens (8), wobei sich die Schlitze in der Wand des Zapfens (8) wieder öffnen und die Wände des Zapfens (8) gegen die Wände der Öffnung (4, 4a) der radialen Erstreckung (3, 3a) drücken. :

2. Laugenbehälter nach Anspruch 1, **dadurch gekennzeichnet, dass** der in Steckrichtung des Zapfens (8) hintere Abschnitt (5) der Öffnung (4) der radialen Erstreckung (3) einen Durchmesser aufweist, der von innen nach außen zunimmt.

3. Laugenbehälter nach Anspruch 2, **dadurch gekennzeichnet, dass** der hintere Abschnitt (5) der Öffnung (4) der radialen Erstreckung (3) kegelstumpfförmig ausgebildet ist.

4. Laugenbehälter nach Anspruch 1, 2 oder 3, **dadurch gekennzeichnet, dass** der vordere Abschnitt (6) der Öffnung (4) der radialen Erstreckungen (3) einen Durchmesser aufweist, der von der Außenseite zur Innenseite abnimmt, um die Einführung der Zapfen (8) zu erleichtern.

5. Laugenbehälter nach Anspruch 4, **dadurch gekennzeichnet, dass** der vordere Abschnitt (6) kegelstumpfförmig ausgebildet ist.

6. Laugenbehälter nach Anspruch 1, **dadurch gekennzeichnet, dass** im Übergangsbereich vom vorderen Abschnitt (6a) zum hinteren Abschnitt (5a) der Öffnung (4a) eine Abstufung (18) auf einen größeren Durchmesser vorgesehen ist, hinter den sich Rasthaken (17), die das freie Ende der Zapfen (8) abschließen, einkuppeln.

7. Laugenbehälter nach einem der Ansprüche 1 oder 6, **dadurch gekennzeichnet, dass** die Öffnung (4, 4a) einen Einführungsanschlag (7) für den Zapfen (8) umfasst.

8. Laugenbehälter nach Anspruch 1, **dadurch gekennzeichnet, dass** der Dübel (13) im axialen Durchgangsloch (10) vor seinem Eintreiben im hinteren Zugang der axialen Öffnung (10) mithilfe von Befestigungsrippen (12) gehalten ist.

9. Laugenbehälter nach einem der Ansprüche 1 oder 8, **dadurch gekennzeichnet, dass** der hintere Zugang der axialen Öffnung (10) einen Eingangsabschnitt (11) mit einem Durchmesser aufweist, der größer als derjenige des Dübels (13) ist.

10. Laugenbehälter nach Anspruch 1, **dadurch gekennzeichnet, dass** die radiale Erstreckung (3, 3a) am hinteren Ende des Zapfens (8) einen konzentrischen Schutzvorsprung (14) für den Dübel (13) aufweist.

11. Laugenbehälter nach Anspruch 1, **dadurch gekennzeichnet, dass** austelle der Befestigung withilfe des Dubels (13) eine selbstschneidende Schraube (19) und eine Unterlegscheibe (20) vorgesehen sind, dass die selbstschneidende Schraube (19) zum Ausführen einer Sicherungsverbindung beider Hälften vom freien Ende des Zapfens (8) aus in das axiale Durchgangsloch (10) des Zapfens (8) eingedreht ist, wobei die Unterlegscheibe (20) am Zugang der Öffnung (4) der radialen Erstreckungen (3) angeordnet ist.

## Claims

1. Washing machine solution container, comprising two halves, which are provided with complementary connecting means consisting of pins (8) and openings (4) at the mouths (1, 2) of the open base parts thereof for production of a fixed connection of the two halves together, wherein the openings (4, 4a) are formed in radial extensions (3, 3a) of the mouth (1) of one base part and have a section (5, 5a) rearward in insertion direction of the pin (8) and a front connecting region (6, 6a) which has a smaller diameter (15, 18); **characterised in that** the pins (8) of the mouth (2) of the other base part have a diameter which is greater than the smaller diameter (15, 18) of the connecting region (6, 6a) of the openings (4, 4a) of the radial extensions (3, 3a), wherein the pins (8) have an axial passage hole (10), which can be penetrated from a rear access by a peg (13) of the same diameter as the passage hole and that each pin (8) has longitudinal slots (9) at its front end in order to facilitate introduction of the pin (8) into the associated opening (4, 4a), wherein the wall of the pin (8) closes in the connecting region (6, 6a) with narrowing of the slots (9), and for subsequent introduction of the peg (13) into the axial passage hole (10) of the pin (8), wherein the slots in the wall of the pin (8) open again and the walls of the pin (8) press against the walls of the opening (4, 4a) of the radial extension (3, 3a).

2. Solution container according to claim 1, **characterised in that** the section (5), which is rearward in the direction of insertion of the pin (8), of the opening (4) of the radial extension (3) has a diameter which increases from the inside to the outside.

3. Solution container according to claim 2, **characterised in that** the rearward section (5) of the opening (4) of the radial extension (3) is formed to be frusto-conical.

4. Solution container according to claim 1, 2, or 3, **characterised in that** the front section (6) of the opening (4) of the radial extensions (3) has a diameter which decreases from the outer side towards the inner side so as to facilitate introduction of the pins (8).

5. Solution container according to claim 4, **characterised in that** the front section (6) is formed to be frusto-conical.

6. Solution container according to claim 1, **characterised in that** provided in the transition region from the front section (6a) to the rearward section (5a) of the opening (4a) is a step (18) to a larger diameter, behind which detent hooks (17) terminating the free end of the pins (8) couple in.

7. Solution container according to one of claims 1 and 6, **characterised in that** the opening (4, 4a) has an introduction abutment (7) for the pins (8).

8. Solution container according to claim 1, **characterised in that** the peg (13) is held in the axial passage hole (10), prior to driving into the rearward access of the axial opening (10), with the help of fastening ribs (12).

9. Solution container according to one of claims 1 and 8, **characterised in that** the rearward access of the axial opening (10) has an entry section (11) with a diameter greater than that of the peg (13).

10. Solution container according to claim 1, **characterised in that** the radial extension (3, 3a) has at the rearward end of the pin (8) a concentric protective projection (14) for the peg (13).

11. Solution container according to claim 1, **characterised in that** instead of fastening with the help of the peg (13) a self-tapping screw (19) and a washer (20) are provided, and that the self-tapping screw (19) is, for forming a securing connection of the two halves, screwed from the free end of the pin (8) into the axial passage hole (10) of the pin (8), wherein the washer (20) is arranged at the access of the opening (4) of the radial extensions (3).

## Revendications

1. Réservoir de lessive pour lave-linge, comprenant deux moitiés, qui sont dotées de moyens de liaison complémentaires constitués de tétons (8) et d'ouvertures (4) sur les orifices (1, 2) de leurs parties de base ouvertes pour l'établissement d'une liaison fixe des deux moitiés l'une avec l'autre, les ouvertures (4, 4a) étant placées dans des extensions (3, 3a) radiales de l'orifice (1) de l'une des parties de base et présentant une partie (5, 5a) arrière dans le sens d'extension du téton (8) et une zone de liaison (6, 6a) avant, qui a un diamètre (15, 18) plus petit, **caractérisé en ce que** les tétons (8) de l'orifice (2) de l'autre partie de base ont un diamètre qui est supérieur au plus petit diamètre (15, 18) de la zone de liaison (6, 6a) des ouvertures (4, 4a) des extensions (3, 3a) radiales, les tétons (8) présentant un trou de passage (10) axial qui peut être traversé à partir d'un accès arrière avec une cheville (13) de même diamètre que le trou de passage, et **en ce que** chaque téton (8) présente des fentes longitudinales (9) sur son extrémité avant pour faciliter l'introduction du téton (8) dans l'ouverture (4, 4a) attribuée, la paroi du téton (8) se terminant dans la zone de liaison (6, 6a) avec le rétrécissement des fentes (9) et pour l'introduction consécutive de la cheville (13) dans le trou de passage (10) axial du téton (8), les fentes dans le mur du téton (8) s'ouvrant à nouveau, et les parois du téton (8) appuyant contre les parois de l'ouverture (4, 4a) de l'extension (3, 3a) radiale.

2. Réservoir à lessive selon la revendication 1, **caractérisé en ce que** la partie (5), arrière dans le sens d'extension du téton (8), de l'ouverture (4) de l'extension (3) radiale présente un diamètre qui augmente de l'intérieur vers l'extérieur.

3. Réservoir à lessive selon la revendication 2, **caractérisé en ce que** la partie (5) arrière de l'ouverture (4) de l'extension (3) radiale est conçue en forme de cône tronqué.

4. Réservoir à lessive selon la revendication 1, 2 ou 3, **caractérisé en ce que** la partie (6) avant de l'ouverture (4) des extensions (3) radiales présente un diamètre qui diminue du côté extérieur vers le côté intérieur afin de faciliter l'introduction des tétons (8).

5. Réservoir à lessive selon la revendication 4, **caractérisé en ce que** la partie (6) avant est conçue en forme de cône tronqué.

6. Réservoir de lessive selon la revendication 1, **caractérisé en ce que,** dans la zone de transition allant de la partie (6a) avant vers la partie (5a) arrière de l'ouverture (4a), il est prévu une gradation (18) vers un diamètre plus grand, derrière lequel s'accouplent des crochets d'encliquetage (17), qui terminent l'extrémité arrière des tétons (8).

7. Réservoir de lessive selon l'une quelconque des revendications 1 ou 6, **caractérisé en ce que** l'ouverture (4, 4a) comporte une butée d'introduction (7) pour le téton.

8. Réservoir de lessive selon la revendication 1, **caractérisé en ce que,** la cheville (13) est maintenue dans le trou de passage (10) axial, avant son engagement dans l'accès arrière de l'ouverture (10) axiale, à l'aide de nervures de fixation (12).

9. Réservoir de lessive selon l'une quelconque des revendications 1 ou 8, **caractérisé en ce que** l'accès arrière de l'ouverture (10) axiale présente une partie d'entrée (11) avec un diamètre qui est supérieur à celui de la cheville (13).

10. Réservoir de lessive selon la revendication 1, **caractérisé en ce que** l'extension (3, 3a) radiale présente sur l'extrémité arrière du téton (8) une saillie de protection (14) concentrique pour la cheville (13).

11. Réservoir de lessive selon la revendication 1, **caractérisé en ce que,** au lieu de la fixation à l'aide de la cheville (13), il est prévu une vis autotaraudeuse (19) et une rondelle plate (20), **en ce que** la vis (19) autotaraudeuse est tournée, pour réaliser une liaison de sécurité des deux moitiés, à partir de l'extrémité libre du téton (8) dans le trou de passage (10) du téton (8), la rondelle plate (20) étant disposée sur l'accès de l'ouverture (4) des extensions (3) radiales.
